# EUROPEAN PATENT APPLICATION

(11) **EP 2 982 876 A1**
(43) Date of publication of application: **10.02.2016**
(21) Application number: 14778426.8
(22) Date of filing: 27.02.2014
(51) Int. Cl.: F16C 29/06

(54) **LINEAR GUIDE DEVICE**

(30) Priority: 01.04.2013 JP 2013076105
(71) Applicant: NSK Ltd., Shinagawa-ku Tokyo 141-8560 (JP)
(72) Inventor: MATSUMOTO, Jun, Fujisawa-shi Kanagawa 252-0811 (JP)
(74) Representative: Cross, James Peter Archibald
(86) International application number: PCT/JP2014/054817
(87) International publication number: WO 2014/162801

(57) **Abstract**

A linear guide apparatus includes a guide rail 4 and a slider 10. At least one of grooves provided on the guide rail 4 and the slider 10 is a groove having a V-like cross sectional shape formed by a combination of two curved surfaces having a circular arc cross sectional shape. One of the two curved surfaces is in contact with balls 7 when the apparatus is in use, and the other curved surface is not in contact with the balls 7 when the apparatus is in use. The depth from an end of one curved surface with respect to the circumferential direction to the bottom of the groove is larger than the depth from an end of the other curved surface with respect to the circumferential direction to the bottom of the groove.

## Description

### TECHNICAL FIELD

The present invention relates to a linear guide apparatus and more particularly to a linear guide apparatus having balls functioning as rolling elements.

### BACKGROUND ART

There have been known a linear guide apparatus used in a transfer apparatus or a semiconductor manufacturing apparatus to support a linearly-moving object with low friction. Such a linear guide apparatus has a guide rail and a slider fitted on the guide rail from above and capable of moving relative to the guide rail along its length direction. The guide rail has rolling grooves provided on its sides and extending along the length direction, which allow balls to roll therein. The slider has rolling grooves opposed to the rolling grooves on the guide rail. Many balls roll in rolling passages formed by the rolling grooves on the guide rail and the rolling grooves on the slider to enable smooth relative movement of the guide rail and the slider.

In some conventional linear guide apparatuses, at least one of the rolling grooves on the guide rail or the rolling grooves on the slider is formed by two curved surfaces so that that rolling groove has a nearly V-shaped cross section.

Japanese Patent Application Laid-Open Nos. S61-241526 and S63-180437 disclose arrangements in which balls are in contact with one of the two curved surfaces of the rolling groove and not in contact with the other curved surface when the apparatus is in normal use. When the position of the rolling groove is measured, a ball used for measurement is set in contact with both the curved surfaces. This arrangement enables accurate measurement of the position of the rolling groove.

### CITATION LIST

### PATENT LITERATURE

Patent Literature 1: Japanese Patent Application Laid-Open No. S61-241526
Patent Literature 2: Japanese Patent Application Laid-Open No. S63-180437

### SUMMARY OF INVENTION

### TECHNICAL PROBLEM

When a load is placed on the slider when the linear guide apparatus is used, contact stress is developed in the rolling grooves on the guide rail and the slider at locations at which they are in contact with balls. In the case of the arrangements disclosed in Japanese Patent Application Laid-Open Nos. S61-241526 and S63-180437, when a particularly high load is placed on the slider, there may be a case in which balls ride onto the shoulder of a rolling groove, so that the range in which contact stress is developed extends to a portion of the guide rail or the slider outside the edge of the rolling groove. In such cases, a high stress or an edge load acts on that portion of the guide rail or the slider, and there is a possibility that an impression (s) is (are) left on the rolling groove by the edge load. The impression (s) left on the rolling groove prevents smooth circulation of balls, leading to deterioration in the functionality of the linear guide apparatus.

The present invention has been made in view of the above-described problem, and an object of the present invention is to provide a linear guide apparatus in which an impression is not likely to be left on the rolling grooves even if a high load acts on the slider.

### SOLUTION TO PROBLEM

To solve the above problem, a linear guide apparatus according to the present invention is characterized by comprising: a straight guide rail having a plurality of straight grooves in which rolling elements roll; a slider having grooves in which the rolling elements roll, said grooves being opposed to said grooves of said guide rail in one-to-one correspondence; and a plurality of rolling elements set between the opposed grooves on said guide rail and said slider in such a way as to be capable of rolling to support said slider in such a way that said slider can move along a length direction relative to said guide rail, wherein at least one of the grooves on said guide rail and the grooves on said slider is made up of a combination of two curved surfaces each having a circular arc cross sectional shape and has a V-like cross sectional shape, one of said two curved surfaces being in contact with said rolling elements when the apparatus is in use, and the other of said two curved surfaces being not in contact with said rolling elements when the apparatus is in use, and the depth from an end, with respect to the circumferential direction, of said one of the curved surfaces of said groove having a V-like cross sectional shape to the bottom of said groove and the depth from an end, with respect to the circumferential direction, of said other of the curved surfaces of said groove having a V-like cross sectional shape to said bottom of said groove are different from each other.

In the linear guide apparatus according to the present invention, it is preferred that the depth from an end, with respect to the circumferential direction, of said one of the curved surfaces of said groove having a V-like cross sectional shape to the bottom of said groove be larger than the depth from an end, with respect to the circumferential direction, of said other of the curved surfaces of said groove having a V-like cross sectional shape to said bottom of said groove.

In the linear guide apparatus according to the present invention, it is preferred that in at least one pair among the pairs of the opposed grooves on said guide rail and said slider, the groove on said guide rail and the groove on said slider be both said grooves having a V-like cross sectional shape.

In the linear guide apparatus according to the present invention, it is preferred that the depth from an end, with respect to the circumferential direction, of said one curved surface of said groove having a V-like cross sectional shape on said guide rail to the bottom of said groove and the depth from an end, with respect to the circumferential direction, of said one curved surface of said groove having a V-like cross sectional shape on said slider to the bottom of said groove be substantially equal to each other.

In the linear guide apparatus according to the present invention, it is preferred that the grooves on said guide rail comprise said groove having a V-like cross sectional shape provided on a side surface of said guide rail at a central position with respect to the vertical direction and extending along said length direction, said one curved surface constitute an upper portion of said groove on said guide rail, and a portion of said side surface below said groove on said guide rail have a portion coplanar with a portion of said side surface above said groove on said guide rail and a portion located inside the plane of said coplanar portions with respect to the width direction of said guide rail.

In the linear guide apparatus according to the present invention, it is preferred that the centers of the circular arcs of the cross sections of said two curved surfaces be located at different positions, and said V-like cross sectional shape be similar to a gothic arch shape.

### ADVANTAGEOUS EFFECT OF INVENTION

The present invention can provide a linear guide apparatus in which an impression is not apt to be formed on a rolling groove even if a high load is placed on the slider.

### BRIEF DESCRIPTION OF DRAWINGS

Fig. 1 is a local cross sectional view showing the structure of a linear guide apparatus according to an embodiment of the present invention.
Fig. 2A is a front view of the linear guide apparatus according to the embodiment seen along the length direction.
Fig. 2B is a plan view of the relevant portions of the linear guide apparatus, where a portion thereof is shown in cross section.
Fig. 3 is an enlarged cross sectional view of an upper rolling passage and a lower rolling passage on one side, seen along the length direction.
Fig. 4 is an enlarged cross sectional view of the portion around a lower rolling groove on a guide rail seen along the length direction.
Fig. 5 is an enlarged cross sectional view of the portion around a lower rolling groove on a slider seen along the length direction.
Fig. 6 is an enlarged cross sectional view seen along the length direction, showing the lower rolling groove on the guide rail and the lower rolling groove on the slider in the assembled state in use.
Fig. 7 is an enlarged cross sectional view seen along the length direction, showing an upper rolling groove on the guide rail and an upper rolling groove on the slider in the assembled state in use.
Fig. 8 is a cross sectional view of a portion around the lower rolling groove on the guide rail and the lower rolling passaage on the slider seen along the length direction.
Figs. 9A and 9B are schematic diagrams showing a guide rail set on a platen or the like, where Fig. 9A shows a case in which a lower portion of a side surface is coplanar with an upper land, and Fig. 9B shows a case in which the lower portion of the side surface is not coplanar with the upper land.
Fig. 10 is a schematic diagram illustrating a method of measuring the groove position in the guide rail.
Fig. 11 is a schematic diagram illustrating a method of measuring the groove position in the slider.
Fig. 12 is a schematic diagram illustrating a method of making the upper rolling groove and the lower rolling groove on the guide rail.
Fig. 13 is a cross sectional view showing a relevant portion of a linear guide apparatus of comparative example 1 used in an experiment.
Fig. 14 is a cross sectional view showing a relevant portion of a linear guide apparatus of comparative example 2 used in the experiment.
Figs. 15A, 15B, and 15C are schematic diagrams illustrating changes in the range of distribution of contact stress in cases where a load is placed on the slider, where Fig. 15A shows a case where the load is low, Fig. 15B shows a case where the load is increased, and Fig. 15C shows a case where the load is further increased.
Figs. 16A and 16B are graphs showing the result of the experiment with comparative example 1, where Fig. 16A shows the surface pressure distribution on the upper flank of the guide rail, and Fig. 16B shows the surface pressure distribution on the lower flank of the slider.
Figs. 17A and 17B are graphs showing the result of the experiment with comparative example 2, where Fig. 17A shows the surface pressure distribution on the upper flank of the guide rail, and Fig. 17B shows the surface pressure distribution on the lower flank of the slider.
Figs. 18A and 18B are graphs showing the result of the experiment with an example according to the present invention, where Fig. 18A shows the surface pressure distribution on the upper flank of the guide rail, and Fig. 18B shows the surface pressure distribution on the lower flank of the slider.

### DESCRIPTION OF EMBODIMENTS

In the following, a linear guide apparatus according to an embodiment of the present invention will be described with reference to the drawings. In this specification, in the state in which the guide rail is oriented horizontally as normal, the horizontal direction perpendicular to the length of the guide rail is defined as the width direction, and the direction perpendicular to the length direction and the width direction is defined as the vertical direction. The upper surface, the lower surface, and both side surfaces extending in the length direction will be referred to as the top surface, the bottom surface, and side surfaces respectively, and the surfaces on at ends with respect to the length direction will be referred to as the end surfaces. These names of the directions and the surfaces also apply to the slider, when the slider is assembled to the guide rail.

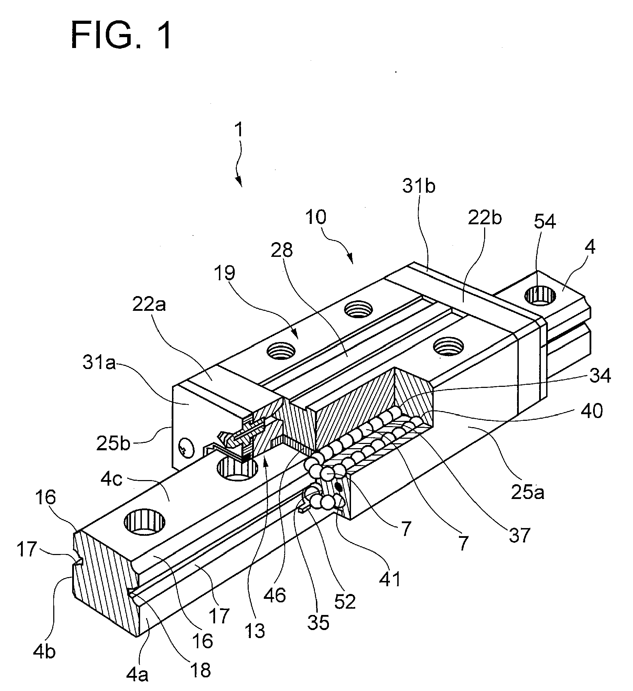

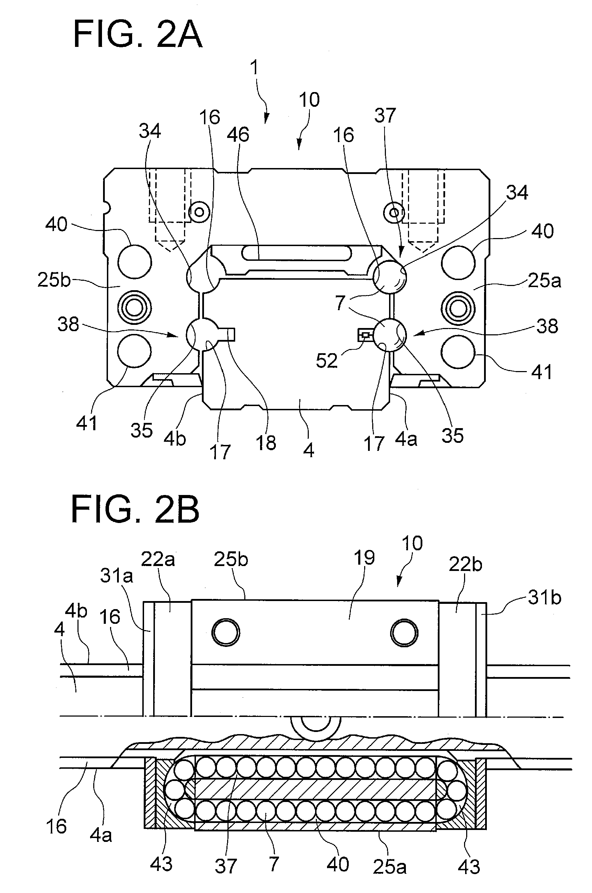

Fig. 1 is a local cross sectional view showing the structure of a linear guide apparatus according to an embodiment of the present invention. Fig. 2A is a front view of the linear guide apparatus seen along the length direction. Fig. 2B is a plan view of the relevant portions of the linear guide apparatus, in which a portion thereof is shown in cross section. Fig. 2A shows a state in which an end cap is removed.

As shown in Figs. 1, 2A, and 2B, the linear guide apparatus 1 includes a linearly-extending guide rail 4 having a substantially rectangular cross section and a slider 10 assembled to the guide rail 4 with balls 7 serving as rollers provided between them to allow the slider to move along the length direction. The slider 10 has, on the bottom, a recessed portion 13 extending in the length direction and has a substantially inverted U-shaped cross section when seen along the length direction. The recessed portion 13 passes through the both end surfaces of the slider 10. The slider 10 is arranged on the guide rail 4 in such a way that the recessed portion 13 rides on the guide rail 4.

On the edge of the guide rail 4 at which its top surface 4c and one side surface 4a meet, there is provided an upper rolling groove 16 extending along the length direction to allow the balls 7 to roll in it. On the edge of the guide rail 4 at which its top surface 4c and the other side surface 4b meet, there is provided a similar upper rolling groove 16. Furthermore, the guide rail 4 has a lower rolling groove 17 provided on the side surface 4a at substantially center with respect to the vertical direction and extending along the length direction to allow the balls 7 to roll in it. On the bottom of the lower rolling groove 17, there is provided a relief groove 18 extending all along the lower rolling groove 17. The guide rail 4 also has a similar lower groove 17 and relief groove 18 provided on the other side surface 4b at substantially center with respect to the vertical direction. As above, each of the side surfaces 4a, 4b of the guide rail 4 is provided with two rolling grooves one above the other, thus the guide rail 4 has four rolling grooves 16, 17 in total.

The slider 10 includes a slider main body 19, and end caps 22a, 22b detachably attached to both ends of the slider main body 19 with respect to the length direction. The slider main body 19 is composed of two leg portions 25a, 25b extending downwardly and in the length direction along the side surfaces 4a, 4b of the guide rail 4 and a body portion 28 that connects the two leg portions 25a, 25b on the top surface 4c side of the guide rail 4.

A side seal 31a, 31b as a dust shield is attached to each of the end caps 22a, 22b on its end with respect to the length direction opposite to the slider main body 19, namely the side seals 31a, 31b are attached to the respective outermost ends of the slider 10 with respect to the length direction. The side seals 31a, 31b seal the gap between the guide rail 4 and the slider 10 to prevent foreign matters such as dust from entering into it from outside.

The inner surface of one leg portion 25a of the slider main body 19 or the surface of one leg portion 25a facing one side surface 4a of the guide rail 4 has an upper rolling groove 34 and a lower rolling groove 35, which are provided at positions opposed to the upper rolling groove 16 and the lower rolling groove 17 on one side surface 4a of the guide rail to allow the balls 7 to roll therein. The inner surface of the other leg portion 25b of the slider main body 19 also has a similar upper rolling groove 34 and lower rolling groove 35 (see Fig. 2A). The upper rolling groove 16 on the guide rail 4 and the upper rolling groove 34 on the slider main body 19 form an upper rolling passage 37 in which the balls 7 roll. The lower rolling groove 17 on the guide rail 4 and the lower rolling groove 35 on the slider main body 19 form a lower rolling passage 38 in which the balls 7 roll. Thus, the guide rail 4 and the slider 10 are provided with four rolling passages in total, including the upper rolling passage and the lower rolling passage provided on one and the other side.

One leg portion 25a of the slider 10 is provided with an upper return passage 40 and a lower return passage 41, which pass through the solid part of the leg portion 25a along the length direction in parallel with the upper rolling passage 37 and the lower rolling passage 38 respectively. Thus, one leg portion 25a is provided with two return passages 40, 41. The other leg portion 25b also is provided with an upper return passage 40 and a lower return passage 41 in the same manner (see Fig. 2A).

Each end cap 22a, 22b has a semicircular upper turn passage 43 that connects the upper rolling passage 37 for the balls 7 and the upper return passage 40 (see Fig. 2B, though the upper turn passage 43 for the other leg portion 25b is not shown) and a semicircular lower turn passage 44 not shown that connects the lower rolling passage 38 and the lower return passage 41, which are provided on the surface of each end cap 22a, 22b in contact with the slider main body 19 at locations opposed to the leg portions 25a, 25b of the slider main body 19. Thus, each end cap 22a, 22b has four turn passages in total, two of which are on one side and two on the other side.

The upper return passage 40 and the upper turn passages 43, 43 at both ends cooperate to transfer the balls 7 from one end of the upper rolling passage 37 to the other end thereof to enable circulation of the balls 7. As shown in Fig. 2B, the upper return passage 40, the upper turn passages 43, 43 on at both ends, and the upper rolling passage 37 constitute an annular upper circulation passage. Similarly, the lower return passage 41 and the lower turn passages 44, 44 (not shown) at both ends cooperate to transfer the balls 7 from one end of the lower rolling passage 38 to the other end thereof to enable circulation of the balls 7. The lower return passage 41, the lower turn passages 44, 44 (not shown) and the lower rolling passage 38 constitute an annular lower circulation passage. Thus, the guide rail 4 and the slider 10 are provided with four annular circulation passages in total.

Many balls 7 are fitted in the annular upper circulation passage and the annular lower circulation passage in such a way that the balls 7 can roll in them. The balls 7 allow the slider 10 to move on the guide rail 4 in the axial direction.

As the slider 10 moves along the length direction of the guide rail 4, the balls 7 in the upper rolling passage 37 and the lower rolling passage 38 roll to move in the upper rolling passage 37 and the lower rolling passage 38. Thus, the balls 7 move in the same direction as the slider 10. When each ball 7 reaches one end of the upper rolling passage 37 or the lower rolling passage 38, it enters the upper turn passage 43 or the lower turn passage 44 (not shown) provided in the end cap 22a (or 22b). After entering the upper turn passage 43 or the lower turn passage 44 (not shown), the ball 7 U-turns to enter the upper return passage 40 or the lower return passage 41 and rolls in the return passage 40 or 41 to reach the upper turn passage 43 or the lower turn passage 44 (not shown) provided in the end cap 22b (or 22a) on the other end. Then, the ball 7 U-turns again in the turn passage 43 or 44 on the other end to return to the upper rolling passage 37 or the lower rolling passage 38 at the other end. As the slider 10 moves, the balls 7 in the annular upper circulation passage and the annular lower circulation passage circulate in the above-described manner repeatedly.

The slider 10 is provided with a ball holder 46 arranged in the recessed portion 13 in parallel with the top surface 4c of the guide rail 4, as shown in Figs. 1 and 2A. The slider 10 is also provided with a rod-shaped ball holder 52 that supports the balls 7 in the lower rolling passage 38. Both ends of the ball holder 52 is supported on the end caps 22a and 22b respectively, and other portion thereof is received in the relief groove 18 on the guide rail 4.

The guide rail 4 has bolt holes 54, which are used when the guide rail 4 is mounted on a target object such as a machine tool.

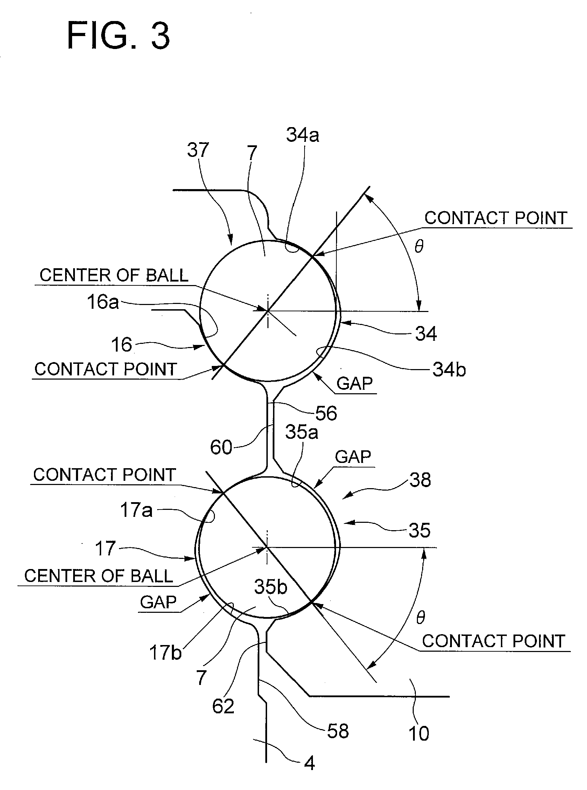

Fig. 3 is an enlarged cross sectional view of the upper rolling passage 37 and the lower rolling passage 38 on one side or the right side in Fig. 2A, seen along the length direction.

As shown in Fig. 3, the cross sectional shape of the upper rolling groove 16 on the guide rail 4 is a circular arc having a single curvature. In other words, the upper rolling groove 16 is formed by a curved surface 16a having a single curvature extending in the length direction. The curvature of the curved surface 16a is lower than the curvature of the balls 7.

The lower rolling groove 17 on the guide rail is formed by a combination of two wall surfaces or an upper flank 17a and a lower flank 17b. The upper flank 17a and the lower flank 17b are curved surfaces each of which has a concaved circular arcuate cross sectional shape. The center of the circular arc in the cross section of the upper flank 17a and the center of the circular arc in the cross section of the lower flank 17b are located at different positions. Therefore, the cross section of the lower rolling groove 17 has a V-like shape or what is called a gothic arch shape. Specifically, one end of the circular arc in the cross section of the upper flank 17a and one end of the circular arc in the cross section of the lower flank 17b are located at the same point, and the other end of the circular arc in the cross section of the upper flank 17a and the other end of the circular arc in the cross section of the lower flank 17b are located at different positions. In the following description of the embodiment, curved surfaces that form a rolling groove having a V-like cross section and each has a concave circular arcuate cross sectional shape will be referred to as flanks.

In Fig. 3, the linear portion between the upper rolling groove 16 and the lower rolling groove 17 will be referred to as an upper land 56, and the linear portion extending downwardly from the lower rolling groove 17 will be referred to as a lower land 58. The upper land 56 and the lower land 58 are portions of the side surface 4a (see Figs. 1 and 2A) of the guide rail 4.

As with the lower rolling groove 17 on the guide rail 4, the upper rolling groove 34 on the slider 10 is formed by an upper flank 34a and a lower flank 34b each having a concave circular arcuate cross sectional shape and has a V-like cross sectional shape. The center of the circular arc in the cross section of the upper flank 34a and the center of the circular arc in the cross section of the lower flank 34b are located at different positions. Therefore, the cross section of the upper rolling groove 34 has a V-like shape or what is called a gothic arch shape. Specifically, one end of the circular arc in the cross section of the upper flank 34a and one end of the circular arc in the cross section of the lower flank 34b are located at the same point, and the other end of the circular arc in the cross section of the upper flank 34a and the other end of the circular arc in the cross section of the lower flank 34b are located at different positions.

The lower rolling groove 35 on the slider 10 is formed by an upper flank 35a and a lower flank 35b each having a concave circular arcuate cross sectional shape and has a V-like cross sectional shape. The center of the circular arc in the cross section of the upper flank 35a and the center of the circular arc in the cross section of the lower flank 35b are located at different positions. Therefore, the cross section of the lower rolling groove 35 has a V-like shape or what is called a gothic arch shape. Specifically, one end of the circular arc in the cross section of the upper flank 35a and one end of the circular arc in the cross section of the lower flank 35b are located at the same point, and the other end of the circular arc in the cross section of the upper flank 35a and the other end of the circular arc in the cross section of the lower flank 35b are located at different positions.

The linear portion between the upper rolling groove 34 and the lower rolling groove 35 will be referred to as an upper land 60, and the linear portion extending downwardly from the lower rolling groove 35 will be referred to as a lower land 62. The upper land 60 and the lower land 62 are portions of the inner surface (see Figs. 1 and 2A) of the leg portion 25a of the slider 10.

When the apparatus is in use, the balls 7 are in contact with the upper flank 34a of the upper rolling groove 34 on the slider 10 and the curved surface 16a of the upper rolling groove 16 on the guide rail 4. The upper flank 34a and the curved surface 16a are designed in such a way that the points of contact of a ball 7 with the upper flank 34a and the curved surface 16a form a predetermined contact angle θ in the range of 30° to 60°. For example, in this embodiment, the contact angle is 50°. In Fig. 3, the line that passes through the point of contact of the upper flank 34a and the ball 7 and the point of contact of the curved surface 16a and the ball 7 and passes through the ball 7 is the load bearing line of the ball 7 in the upper rolling passage 37.

The contact angle of a ball 7 on a surface is defined as the angle formed by a horizontal line passing through the center of the ball 7 and the line passing through the point of contact of that surface and the ball 7 and the center of the ball 7. In the case of the upper flank 34a, the contact angle is the angle formed by a horizontal line passing through the center of the ball 7 and the line passing through the point of contact of the upper flank 34a and the ball 7 and the center of the ball 7. In the case of the curved surface 16a, the contact angle is the angle formed by a horizontal line passing through the ball 7 and the line passing through the point of contact of the curved surface 16a and the ball 7 and the center of the ball 7.

When the apparatus is in use, the balls 7 are in contact with the lower flank 35b of the lower rolling groove 35 on the slider 10 and the upper flank 17a of the lower rolling groove 17 on the guide rail 4. The lower flank 35b and the upper flank 17a are designed in such a way that the points of contact of a ball 7 with the lower flank 35b and the upper flank 17a form a predetermined contact angle θ in the range of 30° to 60°. For example, in this embodiment, the contact angle is 50°. In Fig. 3, the line that passes through the point of contact of the upper flank 17a and the ball 7 and the point of contact of the lower flank 35b and the ball 7 and passes through the ball 7 is the load bearing line of the ball 7 in the lower rolling passage 38.

The load bearing line of the ball 7 in the upper rolling passage 37 and the load bearing line of the ball 7 in the lower rolling passage 38 are designed to intersect at an angle close to a right angle, and this load bearing line is designed to be symmetrical with the load bearing line on the opposite side or the load bearing line (not shown) on the left side in Fig. 2A. Therefore, the balls 7 can bear loads in all the directions.

As shown in Fig. 3, when the apparatus is in use, the lower flank 34b of the upper rolling groove 34 on the slider 10 is not in contact with the balls 7. Moreover, neither the lower flank 17b of the lower rolling groove 17 on the guide rail 4 nor the upper flank 35a of the lower rolling groove 35 on the slider 10 is in contact with the balls 7. Gaps of several or several ten micrometers are left between these flanks 34b, 17b, 35a and the balls 7.

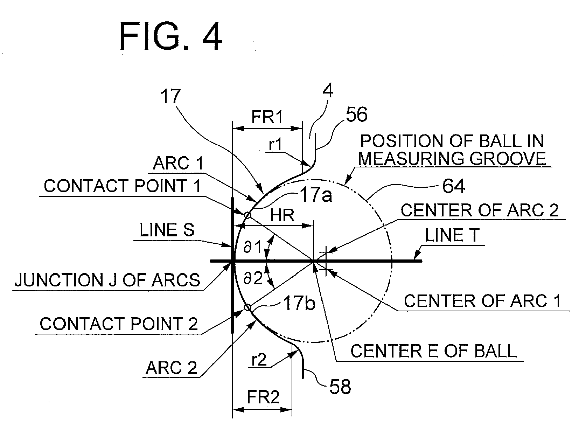

Fig. 4 is an enlarged cross sectional view of the portion around the lower rolling groove 17 on the guide rail 4 seen along the length direction. The circular arc 1 of the cross section of the upper flank 17a of the lower rolling passage 17 and the circular arc 2 of the cross section of the lower flank 17b of the lower rolling passage 17 have the same curvature, which is slightly lower than the curvature of the ball 7. In other words, the radius of the circular arcs 1, 2 of the cross section of the upper flank 17a and the lower flank 17b is slightly larger than the radius of the ball 7. Specifically, the radius of the circular arcs 1, 2 is 0.51 to 0.60 times the diameter of the ball 7. The center of the circular arc 1 and the center of the circular arc 2 are located at difference positions.

The upper edge of the lower rolling groove 17 or the upper end of the upper flank 17a has a chamfer r1 that connects the upper flank 17a and the upper land 56. Likewise, the lower edge of the lower rolling groove 17 or the lower end of the lower flank 17a has a chamfer r2 that connects the lower flank 17a and the lower land 58. The chamfers r1 and r2 are round chamfers. Providing chamfers r1 and r2 prevents burrs produced when forming the lower rolling groove 17 on the guide rail 4 from being left. The radius of the chamfers r1 and r2 is approximately 0.1 times the diameter of the ball 7.

A measurement ball 64 is used to measure the groove position, such as the width and the vertical position, of the lower rolling groove 17. The measurement ball 64 has a diameter equal to that of the normally used rolling balls 7. The measurement ball 64 is in contact with both the upper flank 17a and the lower flank 17b at the same time, as illustrated by the two-dot chain line in Fig. 4. Therefore, the position of the measurement ball 64 is more stable as compared to the case where a measurement ball is in contact with a flank having a single curvature. Consequently, the groove position can be measured with high accuracy. In this embodiment, the contact angle a1 of the measurement ball 64 and the upper flank 17a and the contact angle a2 of the measurement ball 64 and the lower flank 17b are designed to be equal to each other.

The point at which the upper flank 17a and the lower flank 17b join will be referred to as junction J. The center of the measurement ball 64 in the state in which it is in contact with both the flanks 17a, 17b will be referred to as center E. The line passing through the junction J and the center E or the horizontal line passing through the center E will be referred to as line T. The line perpendicular to the line T and passing through the junction J will be referred to as line S. The line S serves as a base position, and the length of a perpendicular dropped from the end of the flank 17a adjacent to the chamfer r1 to the line S is defined as an effective depth FR1 of the flank 17a. Likewise, the length of a perpendicular dropped from the end of the flank 17b adjacent to the chamfer r2 to the line S is defined as an effective depth FR2 of the flank 17b. The direct distance between the line S and the center E is defined as a ball height HR.

In this embodiment, FR1 is larger than FR2 (FR1 > FR2). Namely, the effective depth of the upper flank 17a is larger than the effective depth of the lower flank 17b. In other words, in the lower rolling groove 17, the depth from the end of the upper flank 17a to the bottom of the groove is larger than the depth from the end of the lower flank 17b to the bottom of the groove.

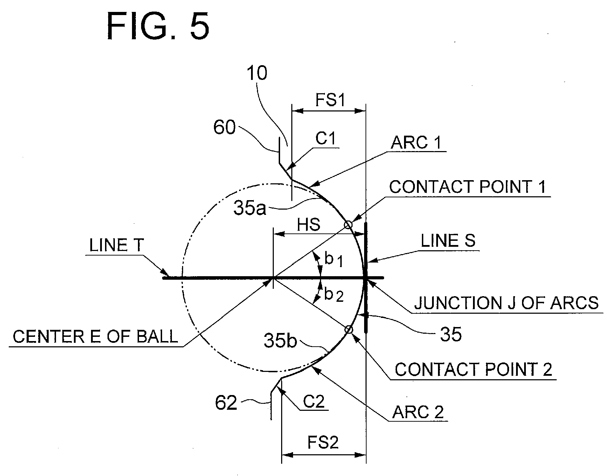

Fig. 5 is an enlarged cross sectional view of the portion around the lower rolling groove 35 on the slider 10 seen along the length direction. The circular arc 1 of the cross section of the upper flank 35a of the lower rolling passage 35 and the circular arc 2 of the cross section of the lower flank 35b of the lower rolling passage 35 have a curvature equal to the curvature of the upper flank 17a and the lower flank 17b of the guide rail 4. Thus, the radius of the circular arcs 1, 2 of the cross section of the upper flank 35a and the lower flank 35b is slightly larger than the radius of the ball 7. Specifically, the radius of the circular arcs 1, 2 is 0.51 to 0.60 times the diameter of the ball 7. The center of the circular arc 1 and the center of the circular arc 2 are located at difference positions.

The upper edge of the lower rolling groove 35 or the upper end of the upper flank 35a has a chamfer c1 that connects the upper flank 35a and the upper land 60. Likewise, the lower edge of the lower rolling groove 35 or the lower end of the lower flank 35a has a chamfer c2 that connects the lower flank 35a and the lower land 62. The chamfers c1 and c2 are chamfer planes. Alternatively, the chamfers c1 and c2 may be round chamfers as in the guide rail 4.

A measurement ball 64 is used to measure the groove position of the lower rolling groove 35, as in the measurement of the lower rolling groove 17 on the guide rail 4. The measurement ball 64 is in contact with both the upper flank 35a and the lower flank 35b at the same time, as illustrated by the two-dot chain line in Fig. 5. Consequently, the groove position can be measured with high accuracy. In this embodiment, the contact angle b1 of the measurement ball 64 and the upper flank 35a and the contact angle b2 of the measurement ball 64 and the lower flank 35b are designed to be equal to each other.

The point at which the upper flank 35a and the lower flank 35b join will be referred to as junction J. The center of the measurement ball 64 in the state in which it is in contact with both the flanks 35a, 35b will be referred to as center E. The line passing through the junction J and the center E or the horizontal line passing through the center E will be referred to as line T. The line perpendicular to the line T and passing through the junction J will be referred to as line S. The line S serves as a base position, and the length of a perpendicular dropped from the end of the flank 35a adjacent to the chamfer c1 to the line S is defined as an effective depth FS1 of the flank 35a. Likewise, the length of a perpendicular dropped from the end of the flank 35b adjacent to the chamfer c2 to the line S is defined as an effective depth FS2 of the flank 35b. The direct distance between the line S and the center E is defined as a ball height HS.

In this embodiment, FS2 is larger than FS1 (FR2 > FR1). Namely, the effective depth of the lower flank 35b is larger than the effective depth of the upper flank 35a. In other words, in the lower rolling groove 35, the depth from the end of the lower flank 35b to the bottom of the groove is larger than the depth from the end of the upper flank 17a to the bottom of the groove.

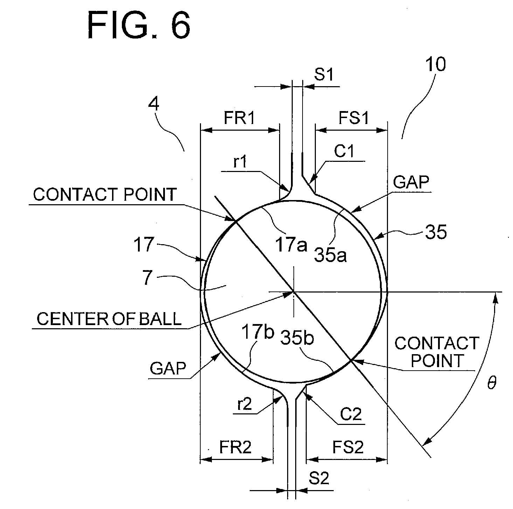

Fig. 6 is an enlarged cross sectional view seen along the length direction, showing the lower rolling groove 17 on the guide rail 4 and the lower rolling groove 35 on the slider 10 in the assembled state in use.

As shown in Fig. 6, when the apparatus is in use, balls 7 for rolling are fitted between the lower rolling groove 17 and the lower rolling groove 35. The lower rolling groove 17 and the lower rolling groove 35 are arranged in such a way that their vertical positions are relatively offset from each other. Specifically, the lower rolling groove 17 is arranged a little lower than the lower rolling groove 35. Consequently, as described above, the balls 7 are in contact with the upper flank 17a of the lower rolling groove 17 and the lower flank 35b of the lower rolling groove 35 but not in contact with the lower flank 17b of the lower rolling groove 17 or the upper flank 35a of the lower rolling groove 35. The contact angle θ is a predetermined angle between 30° and 60°. In this embodiment, for example, the contact angle θ is 50°. This contact angle θ is different from the contact angles a1, a2, b1, and b2 (see Figs. 4 and 5) in the case where the measurement ball 64 is placed.

In this embodiment, as to the effective depths of the flanks in the lower rolling groove 17, the relationship FR1 > FR2 holds, namely the upper flank 17a has a larger effective depth than the lower flank 17b. As to the effective depths of the flanks in the lower rolling groove 35, the relationship FS2 > FS1 holds, namely the lower flank 35b has a larger effective depth than the upper flank 35a. Thus, the flanks 17a, 35b that are in contact with the balls 7 in the state in use have larger effective depths than the flanks 17b, 35a that are not in contact with the balls 7.

With the linear guide apparatus 1 according to this embodiment having the above-described arrangement, even when a high load is placed on the slider 10, the balls 7 are not apt to ride onto the shoulder of the lower rolling groove 17 or the lower rolling groove 35. Specifically, the balls 7 are not apt to be displaced beyond the upper end of the upper flank 17a of the lower rolling groove 17 or beyond the lower end of the lower flank 35b of the lower rolling groove 35.

In consequence, an edge load is prevented from acting on the portion of the guide rail 4 above the upper end of the upper flank 17a or the portion of the slider 10 below the lower end of the lower flank 35b, and an impression is prevented from being left on the lower rolling groove 17 or the lower rolling groove 35. The edge load mentioned above refers to an excessively high stress concentration occurring an edge of a member. This advantageous effect of this embodiment will be described later based on an example and comparative examples.

In this embodiment, the effective depth FR1 of the upper flank 17a and the effective depth FS2 of the lower flank 35b are substantially equal to each other. Consequently, the load bearing capacity of the guide rail 4 and the load bearing capacity of the slider 10 are substantially equal to each other.

In this embodiment, as shown in Fig. 6, the distance S1 between the upper land 56 (see Fig. 3) of the guide rail 4 and the upper land 60 (see Fig. 3) of the slider 10 is substantially equal to the distance S2 between the lower land 58 (see Fig. 3) of the guide rail 4 and the lower land 62 (see Fig. 3) of the slider 10. The effective depth FR1 of the upper flank 17a and the effective depth FS2 of the lower flank 35b can be increased by decreasing the aforementioned distances S1 and S2. However, if the distances S1 and S2 are too short, there is a possibility that the guide rail 4 and the slider 10 may interfere with each other due to a manufacturing error. Therefore, it is preferred that the distances S1 and S2 be in the range of 0.1 to 0.5 mm approximately. In this embodiment, distances S1 and S2 are 0.25 mm.

In this embodiment, the effective depth FR1 of the upper flank 17a and the effective depth FS2 of the lower flank 35b are made large while providing appropriate distances S1 and S2. Specifically, in order to increase the effective depth FR1, the upper land 56 of the guide rail 4 is made prominent toward the upper land 60 of the slider 10, and the thickness of the upper land 60 portion of the slider 10 along the width direction is decreased by an amount equal to the amount of prominence of the upper land 56 of the guide rail 4. Likewise, in order to increase the effective depth FS2, the lower land 62 of the slider 10 is made prominent toward the lower land 58 of the guide rail 4, and the thickness of the lower land 58 portion of the guide rail 4 along the width direction is decreased by a amount equal to the amount of prominence of the lower land 62 of the slider 10.

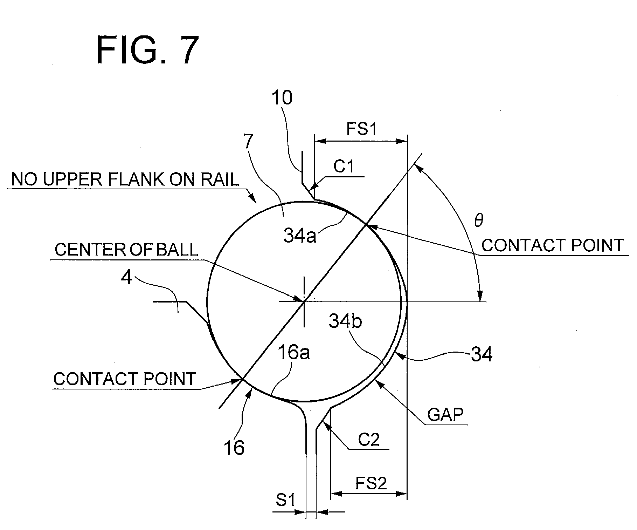

Fig. 7 is an enlarged cross sectional view seen along the length direction, showing the upper rolling groove 16 on the guide rail 4 and the upper rolling groove 34 on the slider 10 in the assembled state in use.

As shown in Fig. 7, when the apparatus is in use, balls 7 for rolling are fitted between the upper rolling groove 16 and the upper rolling groove 34. The balls 7 are in contact with the curved surface 16a of the upper rolling groove 16 and the upper flank 34a of the upper rolling groove 34 but not in contact with the lower flank 34b of the lower rolling groove 34. The contact angle θ is a predetermined angle between 30° and 60°. In this embodiment, for example, the contact angle θ is 50°. The upper rolling groove 16 is constituted only by the curved surface 16a, and it does not have an upper flank.

In the case of the upper rolling groove 34 on the slider 4 also, the effective depth FS1 of the upper flank 34a and the effective depth FS2 of the lower flank 34b are defined in the same manner as in the case of the lower rolling groove 17 on the guide rail 4 and the lower rolling groove 35 on the slider 4. In the case of the upper rolling groove 34, the effective depth FS1 is larger than the effective depth FS2 (FS1 > FS2). Namely, the upper flank 34a or the flank that is in contact with the balls 7 when the apparatus is in use has a larger effective depth, as in the case of the lower rolling groove 17 on the guide rail 4 and the lower rolling groove 35 on the slider 4. Therefore, even when a high load is placed on the slider 10, the balls 7 are not apt to be displaced beyond the upper end of the upper flank 34a. In consequence, an edge load is prevented from acting on the portion of the slider 10 above the upper end of the upper flank 34a, and an impression is prevented from being left on the upper rolling groove 34.

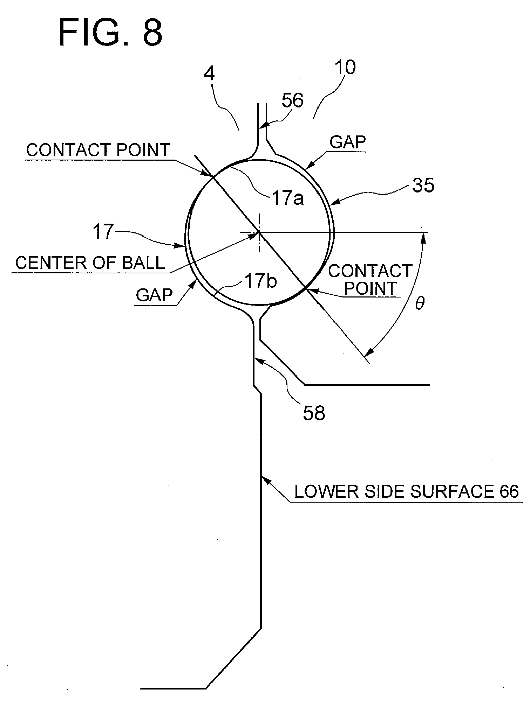

Fig. 8 is a cross sectional view of a portion around the lower rolling groove 17 on the guide rail 4 and the lower rolling groove 35 on the slider 10 seen along the length direction.

As shown in Fig. 8, with respect to the width direction of the guide rail 4, the position of the lower land 58 is offset from the position of the upper land 56 of the guide rail 4 to the inside of the guide rail 4, namely offset to the left in Fig. 8. This is because the effective depth FR2 of the lower flank 17b of the lower rolling groove 17 is smaller than the effective depth FR1 of the upper flank 17a.

In this embodiment, the portion of the side surface 4a of the guide rail 4 below the lower land 58 (which will be hereinafter referred to as the lower side surface 66) is located coplanar with the upper land 56. Thus, the lower side surface 66 serves as a measurement reference plane.

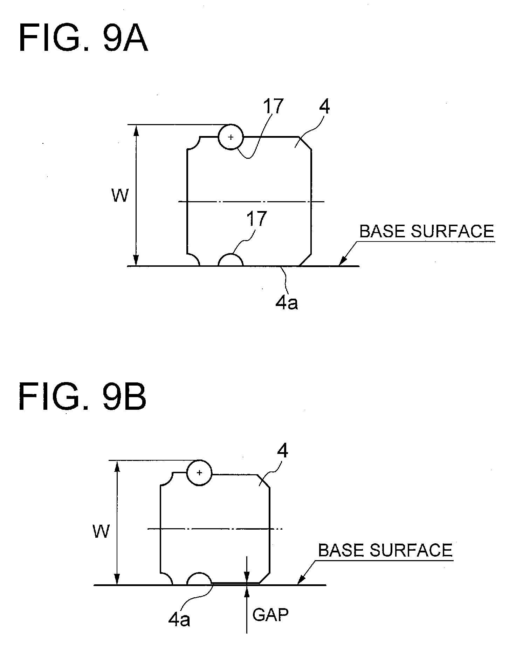

Specifically, as shown in Fig. 9A, when measuring the groove position of the lower rolling groove 17 on the guide rail 4, the side surface 4a of the guide rail 4 can be placed stably on a base surface of a surface plate or the like. In consequence, the groove position W shown in Fig. 9A can be measured with high accuracy.

Fig. 9B shows a guide rail 4 of which the lower side surface 66 is not coplanar with the upper land 56, for the sake of comparison with Fig. 9A. In the case where the lower side surface 66 is not coplanar with the upper land 56, when the side surface 4a of the guide rail 4 is placed on the base surface of a platen or the like, a gap is left between the side surface 4a of the guide rail 4 and the surface plate, and the guide rail 4 cannot be fixed on the surface plate stably. Then, it is difficult to measure the groove position W with high accuracy.

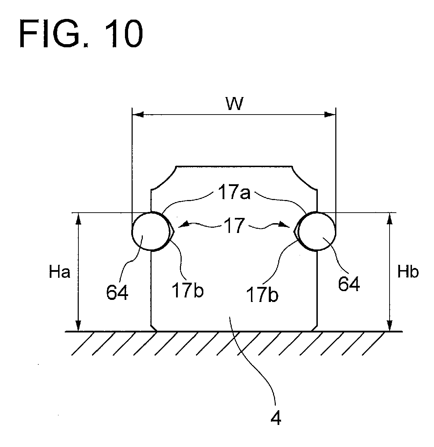

Fig. 10 is a schematic diagram illustrating a method of measuring the groove position in the guide rail 4. When measuring the groove position of the lower rolling groove 17 on the guide rail 4, a measurement ball 64 are used. Since the measurement ball 64 is in contact with both the upper flank 17a and the lower flank 17b at the same time as shown in Fig. 10, the position of the measurement ball 64 is stable. Consequently, the distance W between the grooves on both sides, the height Ha, and height Hb can be measured with high accuracy. The measurement ball 64 has a diameter equal to the diameter of the balls 7 for rolling.

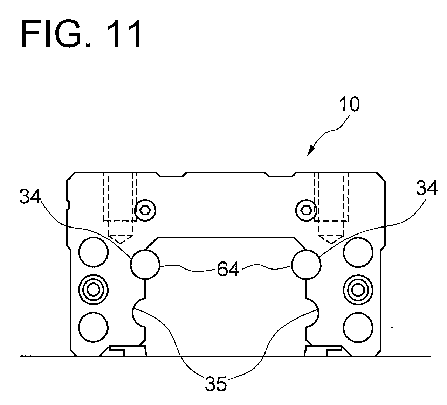

Fig. 11 is a schematic diagram illustrating a method of measuring the groove position in the slider 10. In the case of the slider 10 also, as in the case of the guide rail 4, the upper rolling groove 34 and the lower rolling groove 35 can be measured with high accuracy by using the measurement ball 64.

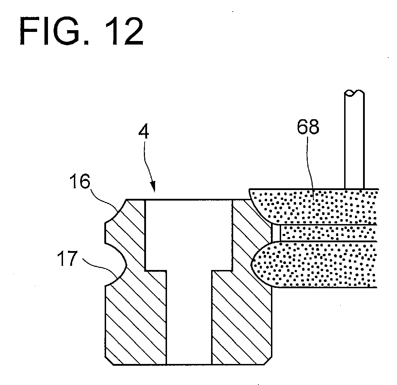

Fig. 12 is a schematic diagram illustrating a method of making the upper rolling groove 16 and the lower rolling groove 17 on the guide rail 4. In this embodiment, the upper rolling groove 16 is a curved surface 16a having a single curvature, and the lower rolling groove 17 is a groove having a V-like cross section. Therefore, it is difficult to measure the dimensions of the upper rolling groove 16 directly with high accuracy. In this embodiment, the upper rolling groove 16 and the lower groove 17 are cut at the same time using a form grinder 68 shown in Fig. 12. The form grinder 68 can ensure accuracy in dimensions relatively easily. Therefore, if the groove position of only the lower rolling groove 17 is measured with high accuracy as shown in Fig. 10, the accuracy of the groove position of the upper rolling groove 16 can also be guaranteed.

In the following, an experiment conducted to verify advantages of the linear guide apparatus 1 according to this embodiment and its result will be described.

The experiment was conducted for an example of the linear guide apparatus 1 according to the embodiment and comparative examples 1 and 2 to compare, among them, the surface pressure distribution on the upper flank 17a of the lower rolling groove 17 on the guide rail 4 and the lower flank 36b of the lower rolling groove 35 on the slider 10 when a load is placed on the slider 10.

In the example of the linear guide apparatus 1 used in the experiment, the effective depth FR1 of the upper flank 17a is larger than the effective depth FR2 of the lower flank 17b, and the effective depth FS2 of the lower flank 35b is larger than the effective depth FS1 of the upper flank 35a, as described above. The effective depth FR1 and the effective depth FS2 are substantially equal to each other. Thus, the following relationships hold:
Guide Rail 4: FR1 > FR2,
Slider 10: FS1 < FS2, and
FR1 ≈ FS2.

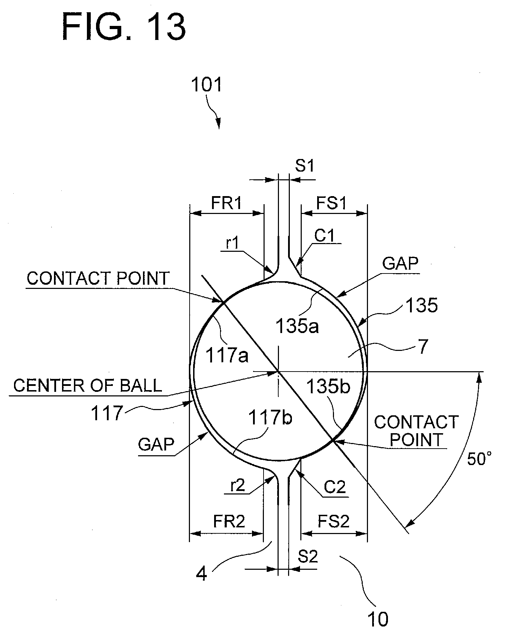

Fig. 13 is a cross sectional view showing a relevant portion of a linear guide apparatus 101 of comparative example 1 used in the experiment. Specifically, Fig. 13 is a cross sectional view of the portion around the lower rolling grooves 117, 135 on the guide rail 4 and the slider 10 seen along the length direction.

In the linear guide apparatus 101 of comparative example 1, the effective depth FR1 of the upper flank 117a of the guide rail 4, the effective depth FR2 of the lower flank 117b of the guide rail 4, the effective depth FS1 of the upper flank 135a of the slider 10, the effective depth FS2 of the lower flank 135b of the slider 10 satisfy the following relationships:
Guide Rail 4: FR1 ≈ FR2,
Slider 10: FS1 ≈ FS2, and
FS1 < FR1.

As above, the effective depths of all the flanks of the slider 10 are smaller than the effective depths of the flanks of the guide rail 4. In the other respects, the apparatus of comparative example 1 is the same as the apparatus of the example according to the invention.

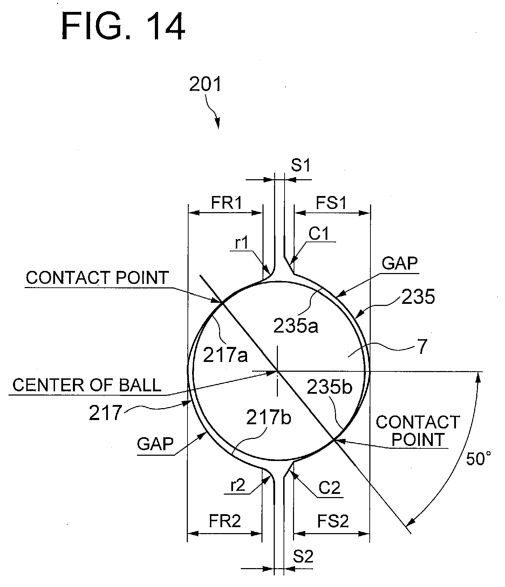

Fig. 14 is a cross sectional view showing a relevant portion of a linear guide apparatus 201 of comparative example 2 used in the experiment. Specifically, Fig. 14 is a cross sectional view of the portion around the lower rolling grooves 217, 235 on the guide rail 4 and the slider 10 seen along the length direction.

In the linear guide apparatus 201 of comparative example 2, the effective depth FR1 of the upper flank 217a of the guide rail 4, the effective depth FR2 of the lower flank 217b of the guide rail 4, the effective depth FS1 of the upper flank 235a of the slider 10, the effective depth FS2 of the lower flank 235b of the slider 10 satisfy the following relationships:
Guide Rail 4: FR1 ≈ FR2,
Slider 10: FS1 ≈ FS2, and
FS1 ≈ FR1.

As above, the effective depths of all the flanks are substantially the same. In the other respects, the apparatus of comparative example 2 is the same as the apparatus of the example according to the embodiment.

The following table 1 shows common and particular specifications of the example and comparative examples 1 and 2.

**(Table 1)**

| [Common Specifications] |
|---|
| Rail Width: 25 mm Ball Diameter: 4.7625 mm Groove Radius: 2.429 mm (0.51 times the ball diameter) Number of Balls Bearing Load: 11 × 2 rows Contact Angle: 50° Load: 20 kN acting upwardly on the slider |

| [Particular Specifications] |
|---|
| (1) Example |
| FR1 = 2.0 mm FR2 = 1.8 mm FS1 = 1.8 mm FS2 = 2.0 mm |

| (2) Comparative Example 1 |
|---|
| FR1 = 2.0 mm FR2 = 2.0 mm FS1 = 1.8 mm FS2 = 1.8 mm |

| (3) Comparative Example 2 |
|---|
| FR1 = 1.9 mm FR2 = 1.9 mm FS1 = 1.9 mm FS2 = 1.9 mm |

In the following, changes in the range of distribution of contact stress generated by a ball 7 in the upper flank 117a of the guide rail 4 and the lower flank 135b of the slider 10, in cases where a load is placed on the slider 10 will be described. Here, the linear guide apparatus 101 of comparative example 1 will be described by way of example.

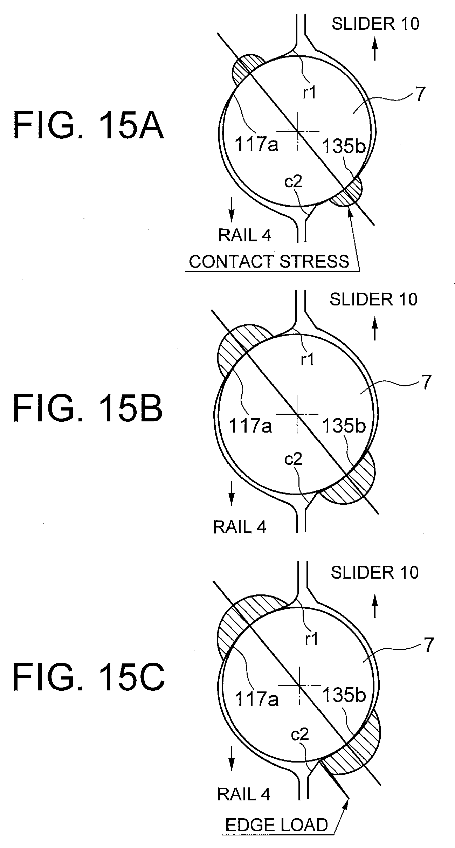

Figs. 15A, 15B, 15C are schematic diagrams illustrating changes in the range of distribution of contact stress in cases where a load is placed on the slider 10, where Fig. 15A shows a case where the load is low, Fig. 15B shows a case where the load is increased, and Fig. 15C shows a case where the load is further increased.

In the experiment, the guide rail 4 was fixed, and a load was placed on the slider 10 in the upwardly lifting direction. In other words, a force in the direction of separating the guide rail 4 and the slider 10 away from each other acted on them.

When a load is placed on the slider 10, the upper flank 117a of the guide rail 4 and the lower flank 135b of the slide 10 receive a load in the portion in contact with each ball 7. This load generates contact stress in the potion in contact with the ball 7. As illustrated as the hatched areas in Fig. 15A, when seen along the length direction, the contact stress is developed in a substantially half oval region extending around the point of contact with the ball 7 in the direction along the load bearing line and in the direction along the circumference of each flank.

As the load placed on the slider 10 increases, the region in which the contact stress developed in the upper flank 117a and the lower flank 135b expands in directions in which the substantially half oval region is enlarged uniformly, due to elastic deformation of the portion in contact with the ball 7, as illustrated as hatched areas in Fig. 15B. In Fig. 15B, the region in the lower flank 135b in which the contact stress is developed extends to a location very close to the chamfer c2.

As the load placed on the slider 10 further increases the region in which the contact stress is developed further extends, and the substantially half oval region illustrated as the hatched area in Fig. 15C becomes large. In Fig. 15C, the region in which the contact stress is developed in the lower flank 135b extends to the chamfer c2. Although the region in which the contact stress is developed has a substantially half oval shape as seen along the length direction as described above, the chamfer c2 cannot bear the load. Consequently, a spike-like pressure peak or edge load appears in the chamfer c2, as shown in Fig. 15C.

The edge load is a prominent pressure peak, which can cause a plastic deformation of the material. A plastic deformation of the rolling groove caused by the edge load prevents smooth circulation of the balls, leading to a deterioration in the performance of the linear guide apparatus. Therefore, the occurrence of the edge load is undesirable.

The result of the experiment conducted with the example according to the embodiment and the comparative examples will be described in the following. The surface pressure distributions were computed by numerical calculation based on the contact analysis.

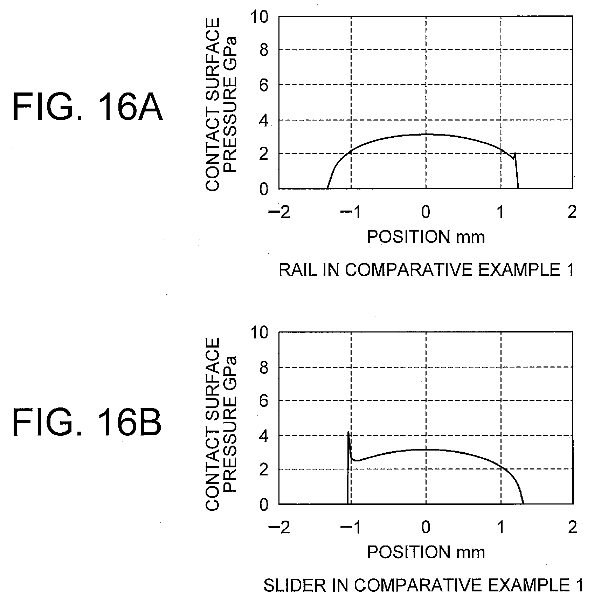

Figs. 16A and 16B are graphs showing the result of the experiment with comparative example 1. Fig. 16A shows the surface pressure distribution on the upper flank 117a of the guide rail 4. Fig. 16B shows the surface pressure distribution on the lower flank 135b of the slider 10.

In comparative example 1, the surface pressure distribution on the upper flank 117a of the guide rail 4 is satisfactory as shown in Fig. 16A. Although there is a low edge load at the upper end of the upper flank 117a or at the location at which it joins to the chamfer r1, it does not cause a problem, because it is lower than the contact surface pressure at the center of the contact portion.

On the other hand, the surface pressure distribution on the slider 10 is not satisfactory. Specifically, there is a prominent edge load at the lower end of the lower flank 135b or at the location at which it joins to the chamfer c2. The contact surface pressure at that location exceeds 4 GPa (gigapascal). A contact surface pressure exceeding 4 GPa may cause a plastic deformation of the flank, possibly leading to an impression left thereon.

As will be seen from Figs. 16A and 16B, in the case of comparative example 1, the allowable load range as the linear guide apparatus is determined by the contact surface pressure on the slider 10. This is because the effective depth of the lower flank 135b of the slider 10 is smaller than the effective depth of the upper flank 117a of the guide rail 4.

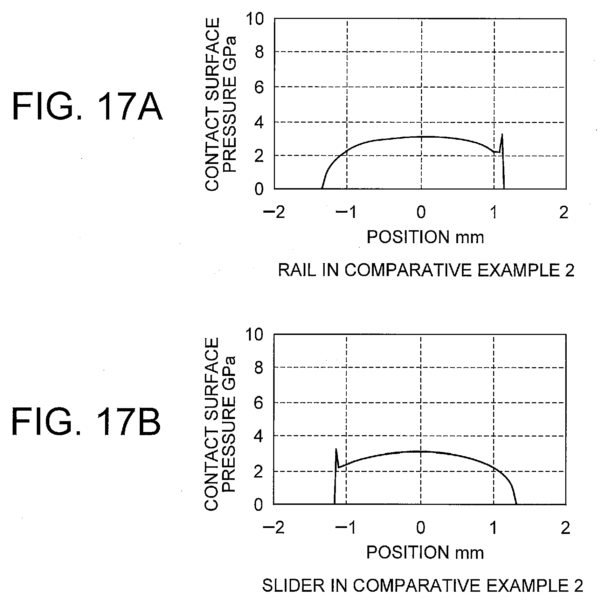

Figs. 17A and 17B are graphs showing the result of the experiment with comparative example 2. Fig. 17A shows the surface pressure distribution on the upper flank 217a of the guide rail 4. Fig. 17B shows the surface pressure distribution on the lower flank 235b of the slider 10.

In comparative example 2, the surface pressure distribution of the guide rail 4 and the surface pressure distribution of the slider 10 are substantially the same, as shown in Figs. 17A and 17B. However, a not low edge load is seen at the upper end of the upper flank 217a of the guide rail 4 or at the location at which it joins to the chamfer r1 and at the lower edge of the lower flank 235b of the slider 10 or at the location at which it joins to the chamber c2. The contact surface pressures of these edge loads do not exceed 4 GPa, and the possibility of formation of an impression is lower as compared to comparative example 1. Nevertheless, the edge loads exceed the contact surface pressures at the center of the respective contact portions. Therefore, a further increase in the load can immediately lead to formation of an impression.

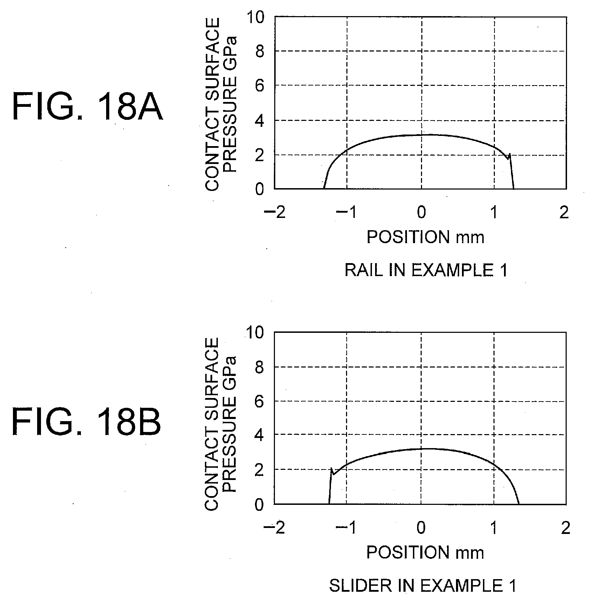

Figs. 18A and 18B are graphs showing the result of the experiment with the example according to the embodiment. Fig. 18A shows the surface pressure distribution on the upper flank 17a of the guide rail 4. Fig. 18B shows the surface pressure distribution on the lower flank 35b of the slider 4.

In the example 1, the surface pressure distribution is satisfactory on both the guide rail 4 and the slider 10, as shown in Figs. 18A and 18B. Although there is a low edge load at the upper end of the upper flank 17a and at the lower end of the lower flank 35b, they do not cause a problem, because they are lower than the contact surface pressures at the center of the respective contact portions.

In the example 1, the surface pressure distribution of the guide rail 4 and the surface pressure distribution of the slider 10 are substantially the same. This is because the effective depth of the upper flank 17a of the guide rail 4 and the lower flank 35b of the slider 10 are substantially equal to each other. Therefore, an impression is not formed on one of the upper flank 17a and the lower flank 35b earlier than the other. Hence the linear guide apparatus can be used until a higher load is placed.

As will be apparent from the result of the experiment shown in Figs. 16A, 16B, 17A, 17B, 18A, and 18B, an impression is not apt to be formed on the rolling grooves of the linear guide apparatus 1 according to the embodiment, even if a high load is placed on the slider. Therefore, the apparatus can be used until a higher load is placed.

## Claims

1. A linear guide apparatus **characterized by** comprising:
a straight guide rail having a plurality of straight grooves in which rolling elements roll;
a slider having grooves in which the rolling elements roll, said grooves being opposed to said grooves of said guide rail in one-to-one correspondence; and
a plurality of rolling elements set between the opposed grooves on said guide rail and said slider in such a way as to be capable of rolling to support said slider in such a way that said slider can move along a length direction relative to said guide rail,
wherein at least one of the grooves on said guide rail and the grooves on said slider is made up of a combination of two curved surfaces each having a circular arc cross sectional shape and has a V-like cross sectional shape, one of said two curved surfaces being in contact with said rolling elements when the apparatus is in use, and the other of said two curved surfaces being not in contact with said rolling elements when the apparatus is in use, and
the depth from an end, with respect to the circumferential direction, of said one of the curved surfaces of said groove having a V-like cross sectional shape to the bottom of said groove and the depth from an end, with respect to the circumferential direction, of said other of the curved surfaces of said groove having a V-like cross sectional shape to said bottom of said groove are different from each other.

2. A linear guide apparatus according to claim 1, **characterized in that** the depth from an end, with respect to the circumferential direction, of said one of the curved surfaces of said groove having a V-like cross sectional shape to the bottom of said groove is larger than the depth from an end, with respect to the circumferential direction, of said other of the curved surfaces of said groove having a V-like cross sectional shape to said bottom of said groove.

3. A linear guide apparatus according to claim 2, **characterized in that** in at least one pair among the pairs of the opposed grooves on said guide rail and said slider, the groove on said guide rail and the groove on said slider are both said grooves having a V-like cross sectional shape.

4. A linear guide apparatus according to claim 3, **characterized in that** the depth from an end, with respect to the circumferential direction, of said one curved surface of said groove having a V-like cross sectional shape on said guide rail to the bottom of said groove and the depth from an end, with respect to the circumferential direction, of said one curved surface of said groove having a V-like cross sectional shape on said slider to the bottom of said groove are substantially equal to each other.

5. A linear guide apparatus according to any of claims 2 to 4, **characterized in that** the grooves on said guide rail comprise said groove having a V-like cross sectional shape provided on a side surface of said guide rail at a central position with respect to the vertical direction and extending along said length direction, said one curved surface constitutes an upper portion of said groove on said guide rail, and a portion of said side surface below said groove on said guide rail has a portion coplanar with a portion of said side surface above said groove on said guide rail and a portion located inside the plane of said coplanar portions with respect to the width direction of said guide rail.

6. A linear guide apparatus according to any of claims 1 to 5, **characterized in that** the centers of the circular arcs of the cross sections of said two curved surfaces are located at different positions, and said V-like cross sectional shape is similar to a gothic arch shape.
